# EUROPÄISCHE PATENTANMELDUNG

(11) **EP 1 724 654 A2**
(43) Veröffentlichungstag der Anmeldung: **22.11.2006**
(21) Anmeldenummer: 05400024.5
(22) Anmeldetag: 03.08.2005
(51) Int. Cl.: G05D 22/02

(54) **Vorrichtung zur Luftfeuchtigkeitsregelung**

(30) Priorität: 17.05.2005 DE 102005023347
(71) Anmelder: Krüss GmbH Wissenschaftliche Laborgeräte, 22453 Hamburg (DE)
(72) Erfinder: Frerichs, Jan-Gerd, 22844 Norderstedt (DE); Friedrich, Bernd, 25474 Hasloh (DE); Scheithaner, Carsten, 22343 Hamburg (DE)

(57) **Zusammenfassung**

Die Erfindung bezieht sich auf eine Vorrichtung zur Luftfeuchtigkeitsregelung (B) in einem (teil-) geschlossenen Volumen (E/F) durch das Einbringen von Luft (C) einer definierten Feuchtigkeit und Temperatur mit einem Injektor (D). Die Einrichtung kann über einen Anschluss (B) extern temperiert werden.

## Beschreibung

### 1 Beschreibung des Technischen Gebietes

Die Erfindung beschreibt eine Vorrichtung zur Luftfeuchtigkeitsregelung, welche bei der Vermessung von Kontaktwinkeln liegender Tropfen, auch aber zur Messung an hängenden Tropfen verwendet wird. Bei der Kontaktwinkelmessung wird ein auf einer Probe liegender Tropfen im Gegenlicht mit einer Kamera beobachtet. Das entstehende Schattenbild wird in Folge über eine Software ausgewertet und der Kontaktwinkel am sogenannten Dreiphasenpunkt (fest/flüssig/gasförmig) bestimmt. Über den Kontaktwinkel kann auf die Oberflächenenergie des Festkörpers geschlossen werden. Bei der Messung an hängenden Tropfen kann über das Videosystem durch die Analyse der Krümmungsradien die Oberflächenspannung der Tropfenflüssigkeit bestimmt werden.

### 2 Beschreibung des Standes der Technik

Die Benetzbarkeit des Festkörpers sowie die Oberflächenspannung eines Tropfens werden von der Luftfeuchtigkeit in der Umgebung beeinflusst. Dementsprechend hoch ist die Bedeutung der beschriebenen Vorrichtung zur Luftfeuchtigkeitsregelung für die Durchführung realitätsnaher Messungen.

Vorrichtungen zur Luftfeuchtigkeitsregelung üblicher Bauart verwenden einen in die Vorrichtung integrierten abgeschlossenen Raum, in dem die Luftfeuchtigkeit geregelt wird. Dies geschieht durch das Durchströmen des Raumes mit Luft einer definierten Feuchtigkeit. Zur Befeuchtung der Luft werden üblicherweise Wasserverdampfer oder Zerstäuber eingesetzt.

### 3 Beschreibung des zugrunde liegenden Problems

Durch den Aufbau von Anordnungen gemäß Stand der Technik ist es aufgrund fehlender Fenster nicht möglich, das Schattenbild eines Objektes zu erzeugen und zu vermessen.

Durch das kontinuierliche Durchströmen mit Luft wie in üblichen Anordnungen gemäß Stand der Technik, wird die Messung speziell bei kleinen Objekten wie einem Flüssigkeitstropfen durch die entstehende Luftbewegung beeinflusst, verfälscht oder im Extremfall unmöglich.

Durch die Verwendung von Wasserverdampfern oder Zerstäubern gemäß Stand der Technik ist die Bildung von Wasser-Luft Aerosolen möglich, welche sich an den zu messenden Proben niederschlagen können und somit die zu messenden Größen beeinflussen.

Bei Luftfeuchtigkeitsregelungen gemäß Stand der Technik ist es nicht möglich, in speziell auf die Messanordnung angepassten externen teilgeschlossenen Probenräumen abhängig von dem entsprechenden Einsatzgebiet die Luftfeuchtigkeit zu regeln.

### 4 Beschreibung der Erfindung

Die Erfindung bezieht sich auf eine Vorrichtung zur Luftfeuchtigkeitsregelung in einem externen teilgeschlossenen Probenraum. Dazu wird Luft mit einer definierten Feuchtigkeit kontinuierlich oder diskontinuierlich über einen Injektor in den Probenraum eingebracht.

Der Luftstrom wird von einer Elektronik über zwei Ventile geregelt. Ein Ventil dient dem Einbringen von trockener Luft, das zweite Ventill dient dem Einbringen von feuchter Luft..

Die beiden Luftströme werden vor dem Eintritt in den Probenraum in einer internen Mischkammer vermischt, so dass sich eine aus den Ventilschaltzeiten resultierende Feuchtigkeit ergibt.

Die Einrichtung arbeitet vorzugsweise mit trockener Luft, aus welcher der trockene Luftstrom abgeleitet wird. Der feuchte Luftstrom wird aus der trockenen Luft erzeugt, in dem diese über eine Membran geleitet wird, welche die Luft maximal mit Wasser anreichert ohne dass es zu einem Auskondensieren des Wasser kommen kann.

Da das in dem feuchten Luftstrom enthaltene Wasser bei jedem negativen Temperaturgradienten zu kondensieren beginnen würde, muss eine homogene Temperatur innerhalb der Vorrichtung gewährleistet sein. Hierzu ist die gesamte Vorrichtung aus einem gut wärmeleitenden Material ausgeführt (vorzugsweise Aluminium). Des weiteren wird der trockene Luftstrom über Wärmetauscher auf die Temperatur der Vorrichtung gebracht, so dass ein Auskondensieren beim Mischen der Luftströme verhindert wird. Der feuchte Luftstrom wird bei der Befeuchtung über die Membran an die Temperatur der Vorrichtung angepasst.

Um einen Temperaturgradienten zwischen Vorrichtung und Probenraum zu verhindern und das Arbeiten bei beliebigen Temperaturen zu ermöglichen, kann der Probenraum mit der Vorrichtung zur Luftfeuchtigkeitsregelung thermisch über ein flüssiges Medium gekoppelt und temperiert werden.

Die Luftfeuchtigkeit innerhalb des Probenraums wird mit einem in den Injektor integrierten Sensor überwacht, so dass die Luftfeuchtigkeit so nah wie möglich an der zu messenden Probe bestimmt wird.

### 5 Beschreibung der vorteilhaften Wirkung der Erfindung auf den bisherigen Stand der Technik

Durch den modularen Aufbau können beliebige Probenräume mit der Einrichtung verwendet werden.

Durch die Möglichkeit der diskontinuierlichen Luftstromregelung kann den Luftstrom während der Messung unterbrochen werden. Dadurch wird eine Beeinflussung der Messung verhindert.

Durch die Trennung der Medien Wasser und Luft mit einer semipermeablen Membran wird verhindert, dass sich ein Wasser-Luft Aerosol bildet und die Messung beeinflusst.

Des weiteren wird vermieden, dass Wasser in den externen Probenraum gelangen kann oder beim Hantieren mit der Vorrichtung innerhalb dieser in nicht dafür vorgesehene Bereiche gelangt. Hieraus und aus der mit einer Membran möglichen, besonders kompakten Bauform ohne bewegliche Teile, resultiert eine hohe Wartungsfreiheit im Bereich der Befeuchtung.

Durch die Möglichkeit, den Probenraum mit der Vorrichtung zur Luftfeuchtigkeitsregelung thermisch über ein flüssiges Medium zu koppeln, wird ein Kondensieren innerhalb des teilgeschlossenen Volumens verhindert.

### 6 Beschreibung einer beispielhaften Ausführung der Erfindung

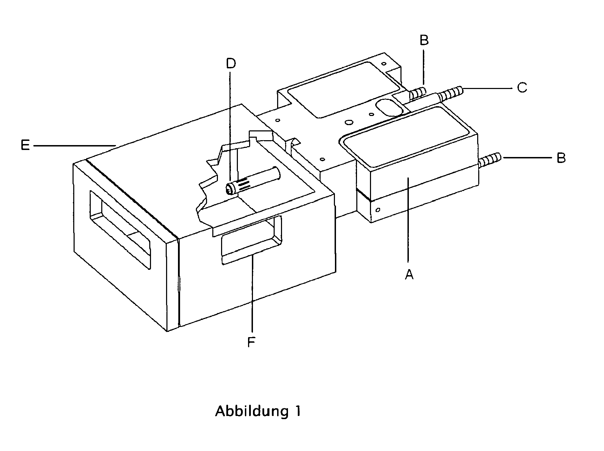

Ein Ausführungsbeispiel ist in der Abbildung 1 dargestellt:

Dargestellt ist eine Vorrichtung zur Luftfeuchtigkeitsregelung, angeschlossen an ein externes teilgeschlossenes Volumen (Probenraum).
A Vorrichtung zur Luftfeuchtigkeitsregelung
B Anschlüsse zur Temperierung mit einem flüssigen Medium
C Anschluss zur Versorgung mit trockener Luft
D Anschluss (Injektor) für ein externes teilgeschlossenes Volumen (Probenraum) mit integriertem Sensor
E Externes teilgeschlossenes Volumen (Probenraum)
F Fenster im Probenraum zur Gegenlichtbetrachtung der Probe

## Patentansprüche

1. Vorrichtung zur Luftfeuchtigkeitsregelung **dadurch gekennzeichnet,**
**dass** von außen zugeführte Luft in einer in sich geschlossenen Einheit durch ein von außen vorgegebenes Maß aerosolfrei befeuchtet und temperiert sowie einem der Vorrichtung nicht zugehörigen teilgeschlossenen Volumen zugeführt wird.

2. Vorrichtung gemäß Anspruch 1 **dadurch gekennzeichnet,**
**dass** die Regelung der Luftfeuchtigkeit sowohl durch kontinuierliches als auch durch diskontinuierliches Einbringen von Luft möglich ist.

3. Vorrichtung gemäß Anspruch 1 **dadurch gekennzeichnet,**
**dass** die Luft über eine Membran mit Wasser befeuchtet wird.

4. Vorrichtung gemäß Anspruch 1 **dadurch gekennzeichnet,**
**dass** die verwendeten Medien thermisch gekoppelt sind.

5. Vorrichtung gemäß Anspruch 1 **dadurch gekennzeichnet,**
**dass** die Vorrichtung in Kombination mit geschlossenen Probenräumen verwendet werden kann.

6. Vorrichtung gemäß Anspruch 5 **dadurch gekennzeichnet,**
**dass** der Probenraum für die optische Tropfenvermessung bei einem Kontaktwinkelmessgerät verwendet wird.
